# EUROPÄISCHE PATENTSCHRIFT

(11) **EP 2 754 409 B1**
(45) Veröffentlichungstag und Bekanntmachung des Hinweises auf die Patenterteilung: **16.12.2020**
(21) Anmeldenummer: 13151340.0
(22) Anmeldetag: 15.01.2013
(51) Int. Cl.: A61C 13/20, F27B 17/02

(54) **Dentalofen**
Dental oven
Four dentaire

(43) Veröffentlichungstag der Anmeldung: 16.07.2014
(73) Patentinhaber: Ivoclar Vivadent AG, 9494 Schaan (LI)
(72) Erfinder: Grünenfelder, Robert, 9492 Eschen (LI); Kettner, Philipp, 6830 Rankweil (AT); Bürke, Harald, 6820 Frastanz (AT)
(74) Vertreter: Baronetzky, Klaus

(56) Entgegenhaltungen:
- EP-A1- 1 440 750
- EP-A1- 1 978 321
- EP-A1- 2 550 929
- DE-A1-102006 032 655
- JP-A- 2002 062 117

## Beschreibung

Die Erfindung betrifft einen Dentalofen gemäß dem Oberbegriff von Anspruch 1.

Es ist seit langem bekannt, bei Dentalöfen Steuerungen vorzunehmen, die den exakten Verlauf der Temperaturkurve der zu brennenden Dentalrestaurationsteile festlegen und regeln.

Ein Beispiel für eine derartige aufwendige Regelung lässt sich der DE 35 05 346 A1 entnehmen. Bei der aus dieser Druckschrift bekannten Lösung wird die Liquidustemperatur des Schmelzguts erfasst, indem der Temperaturverlauf des Schmelzguts bei Zuführung der Heizleistung möglichst exakt gemessen wird und die erreichte Temperaturerhöhungen pro zugeführter Heizleistung erfasst wird.

Bereits aus dieser seinerzeit vorgeschlagenen Lösung ergibt sich, dass es nicht ausreicht, kurzerhand für einen bestimmten Dentalofen ein exaktes Temperatur-/Zeit-Profil vorzugeben; die tatsächlich bestehende aktuelle Temperatur im Inneren des Dentalrestaurationsteils weicht in der Praxis teilweise deutlich von der Ofentemperatur ab.

Der Wert der Abweichung hängt in der Praxis von zahlreichen Parametern ab. Hierzu gehört die Größe, die Masse und Form der Dentalrestaurationsteile, aber auch deren Material, die Schmelztemperatur des Materials, die spezifische Wärmekapazität, die Anordnung der Dentalrestaurationsteile im Ofen - also insofern der Abstand von der meist ringförmig angeordneten Heizung, die Aufheizrate, bei mit Unterdruck betriebenen Dentalbrennöfen die Höhe des Unterdrucks sowie bei Pressöfen der bestehende Druck auf den Pressling.

Auch weitere Parameter wie der Umgebungsluftdruck und die Umgebungstemperatur können in Teilbereichen des durchfahrenen Temperaturprofils eine Rolle spielen.

Um die erwünschte Temperatur möglichst exakt durchfahren zu können, sind auch Steuertafeln für die Steuerung des Ofens entwickelt worden, die die Ist-Temperatur anzeigen sollen und das Durchlaufen des Temperatur-/Zeit-Diagramms symbolisch darstellen sollen. Ein Beispiel hierfür lässt sich der DE 31 46 391 A1 entnehmen.

Bei der Realisierung derartiger Lösungen zeigt es sich jedoch immer wieder, dass auch bei Beachtung der angegebenen Herstellerhinweise und Einstellungen der Vielzahl der Parameter in der auf das Material angepassten Weise Fehlbrände entstanden, also Dentalrestaurationsteile hergestellt wurden, die von mangelhafter Qualität sind.

Zwar lassen sich Verfärbungen von Keramiken durch Maltechniken im Nachhinein zumindest teilweise kompensieren. Wenn jedoch die verwendete Dentalkeramik nicht bei der gewünschten Temperatur mit dem vom Hersteller vorgeschriebenen Temperaturverlauf gebrannt wird, wird typischerweise die Spezifikationen der Keramik nicht erreicht. Beispielsweise zeichnen sich Lithiumdisilikatkeramiken durch eine gute Biokompatibiltät aus, die auch damit einhergeht, dass der der Dentalrestauration gegenüberliegende Antagonist nicht oder nur in ganz geringem Maße Abnutzungserscheinungen zeigt. Wenn nun der exakte Temperatur-Pressverlauf nicht eingehalten wird, lassen sich die günstigen Eigenschaften nur dieser Keramik in verringertem Maße oder überhaupt nicht erreichen.

Bei älteren Keramiken, oder auch bei Zirkondioxidkeramiken kann es auch je nach Anwendungsfall zu Sprödbrüchen mit entsprechenden Regressforderungen kommen.

Um die Fehler beim Brennen von Dentalrestaurationsteilen weiter zu minimieren, sind zahlreiche Vorschläge und Weiterentwicklungen vorgenommen worden. Beispielsweise hat man versucht, die Temperatur des Brennguts besser zu erfassen, wie es beispielsweise aus der DE 10 2007 035 609 A1 ersichtlich ist. Dennoch besteht nach wie vor das Bedürfnis, Risiken beim Brennen und die vorstehend genannten Probleme zu beseitigen oder zu reduzieren.

Aus der EP 1 978 321 A1 ist ein Dentalbrennofen mit einem Brennraum und wenigstens einer für eine in den Brennraum einbringbare Trägervorrichtung für Dentalmaterial bekannt. Hierbei wird wenigstens eine physikalische Größe des Brennraums und/oder der Trägervorrichtung und/oder einer Muffel und/oder eines Keramikrohlings erfasst und an eine Steuervorrichtung weiterleitet. Basierend auf der erfassten physikalischen Größe ist ein Verarbeitungsprogramm des Dentalofens einstellbar.

Daher liegt der Erfindung die Aufgabe zu Grunde, einen Dentalofen gemäß dem Oberbegriff von Anspruch 1 zu schaffen, der hinsichtlich des Risikos, einen Fehlbrand zu erzeugen, oder Dentalrestaurationsteile mit gegenüber der Spezifikation verschlechterten Materialeigenschaften zu erzeugen, weiter minimiert oder gegebenenfalls sogar ausgeschaltet ist.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, einen an sich bekannten Sensor als Erfassungsvorrichtung zu einem modifizierten Zweck zu verwenden. Während die bislang eingesetzten Infrarotsensoren möglichst exakt die Temperatur der Oberfläche der zu brennenden Dentalrestaurationsteile überwachen sollten, wird erfindungsgemäß hiervon abgewichen und der Infrarotsensor wird eingesetzt, die Größe und/oder die Anzahl der zu brennenden Dentalrestaurationsteile zu erfassen. Durch die Größenerfassung ergibt sich implizit auch die Gewichtserfassung, nachdem es erfindungsgemäß vorgesehen ist, die erfassten Werte in Einheiten von Dentalrestaurationsteilen umzurechnen.

Dies sei anhand eines Beispiels erläutert.

Mit dem erfindungsgemäßen Infrarotsensor wird eine Größenbestimmung des zu brennenden Dentalrestaurationsteils vorgenommen. Es ergibt sich eine Größe von beispielsweise 2 mm mal 3 mm. Diese Größe wird der Einheit 1 zugeordnet, und es wird davon ausgegangen, dass das Dentalrestaurationsteil für lediglich einen einzigen Zahn gebrannt wird, also z. B. als Krone für einen einzigen Zahn bestimmt ist.

Bei dem nächsten Brand werde eine von dem Infrarotsensor eine Größe von 22 mm mal 7 mm erfasst. Aufgrund der Länge von 22 mm berechnet die erfindungsgemäße Steuervorrichtung dies so um, dass es sich bei dem Dentalrestaurationsteil um eine dreigliedrige Brücke handeln muss, und es wird damit erfasst, dass ein entsprechend großes und gewichtiges Dentalrestaurationsteil gebrannt werden soll.

Der Benutzer stellt nun den Dentalofen im ersten Fall auf eine Einheit ein, und im zweiten Fall auf drei Einheiten, entsprechend dem von der Steuervorrichtung auf der Anzeigevorrichtung angebotenen Empfehlungswert.

In einem dritten Fall erfasse die Erfassungsvorrichtung eine Größe von 4 mm mal 3 mm und eine weitere Größe von 4 mm mal 5 mm. Die Erfassungsvorrichtung leitet diese Werte der Steuervorrichtung zu, die hieraus durch Normierung der Werte entnimmt, dass zwei Kronen gebrannt werden sollen, eine etwas größere und eine etwas kleinere. Zugleich entnimmt die Erfassungsvorrichtung als Anzahl der Dentalrestaurationsteile 2, und leitet auch diesen Wert der Steuervorrichtung zu. Dieser Wert wird nun in vorteilhafter Ausgestaltung auf der Anzeigevorrichtung dem Benutzer vorgeschlagen, und der Benutzer stellt den Dentalofen entsprechend der Anzahl der Einheiten ein.

Überraschend ergibt sich, dass dieses erfindungsgemäße Verfahren ausgesprochen sicher ist und auch unerfahrenen Zahntechnikern gute Brennresultate ermöglicht.

In vorteilhafter Ausgestaltung wird zusätzlich vom Ofen selbst eine "Feinjustierung" dergestalt vorgenommen, dass wenn die Erfassungsvorrichtung Werte am oberen Ende der einer Einheit zuzuordnenden Größe erfasst, die Temperaturparameter etwas erhöht werden, wie beispielsweise für eine Größe von 4 mm mal 5 mm für eine Einheit, bzw. etwas erniedrigt werden, wenn die erfasste Größe am unteren Ende des der Einheit zugeordneten Wertes liegt, wie im vorstehenden ersten Beispielsfalle mit der Größe von 2 mm mal 3 mm.

Die Erfindung ist nicht auf die Verwendung eines Infrarotsensors oder einer Wärmebildkamera für die Größen- oder Gewichtserfassung beschränkt. Beispielsweise kann anstelle dessen ein thermisch geschützter Dehnungsmessstreifen im Ofenboden integriert sein, der die Belastung des Ofenbodens mit aufgebrachten Dentalrestaurationsteilen misst. Auch durch diese Maßnahme lässt sich die Größe bzw. das Gewicht der zu brennenden Dentalrestaurationsteile bestimmen.

Gleichermaßen kann die Erfindung auch bei Pressöfen zum Einsatz gelangen, bei denen dann die Größe und/oder das Gewicht der eingesetzten Muffel bestimmt wird. Typischerweise werden mehrgliedrige Brücken in größeren Muffeln, also Muffeln von beispielsweise 300 g, gebrannt. Kleinere Dentalrestaurationsteile können hingegen effizient in kleineren Muffeln von 200 g oder sogar von lediglich 100 g gebrannt werden. Beispielsweise können 4 bis 9-gliedrige Brücken in derart großen 300 g-Muffeln gebrannt werden, während 200 g Muffeln typischerweise für 3- bis 5-gliedrige Brücken ausreichen, und für noch kleinere Dentalrestaurationsteile 100 g-Muffeln eingesetzt werden können.

Bei einem Pressofen ist nun bevorzugt die numerische Wiedergabe der Einheiten nicht an die Anzahl der Glieder einer Brücke oder Einzelzähne gekoppelt, sondern beispielsweise an die Muffelgröße, so dass eine erfasste 100 g-Muffel mit 1, eine 200 g-Muffel mit 2 und eine 300 g-Muffel mit 3 wiedergegeben würde. Die Muffelgröße kann dann wiederum in erfindungsgemäß günstiger Weise über ein Infrarotsensor oder über einen Gewichtssensor erfasst werden.

Die Erfassungsvorrichtung ist aber auch nicht auf die bislang erwähnten Sensoren beschränkt. So kann beispielsweise bei geöffnetem Brennofen oder Pressofen eine optische Kamera die Ausgestaltung der zu brennenen Restaurationsteile bzw. Muffeln erfassen, gegebenenfalls sogar zweidimensional, beispielsweise über 2 im Winkel zueinander angeordnete und auf das Dentalrestaurationsteil bzw. der Muffel gerichtete Kamera, oder indem die Kamera beispielsweise um 90 Grad verschwenkt wird. Auch hierdurch lässt sich die Größe und damit implizit das Gewicht und explizit auch die Anzahl der zu brennenden oder zu pressenden Dentalrestaurationsteile erfassen, und erfindungsgemäß in Einheiten quantifizieren und/oder normieren und bevorzugt dem Benutzer in dieser Weise anbieten. In modifizierter Ausgestaltung wird der Ofen gleichsam automatisch basierend auf der Einheitenermittlung, wie sie vorstehend beschrieben ist, eingestellt, und der Benutzer wird lediglich über die ermittelte Größe in normierter Form informiert, beispielsweise über eine Anzeigevorrichtung, die die Anzahl der Einheiten darstellt.

In Abhängigkeit von den ermittelten Einheiten wird erfindungsgemäß das Pressprogramm bzw. das Brennprogramm eingestellt, wobei in vorteilhafter Weise auch ein Benutzereingriff möglich ist. Ein möglicher Benutzereingriff umfasst bevorzugt jedoch auch eine Logikprüfeinheit, die es verhindert, dass ein Brennprogramm oder ein Pressprogramm eingestellt wird, das nicht zu dem vom Benutzer vorgegebenen eingestellten Einheitswert passt.

In vorteilhafter Ausgestaltung ist es vorgesehen, dass der Dentalofen eine Erfassungsvorrichtung aufweist, die an die Steuervorrichtung angeschlossen ist und die Größe des und/oder die Anzahl der und/oder das Gewicht des Dentalrestaurationsteils erfasst.

In vorteilhafter Ausgestaltung ist es vorgesehen, dass die Erfassungsvorrichtung der Steuervorrichtung einen Wert der erfassten Größe des und/oder die Anzahl der und/oder des Gewichts des Dentalrestaurationsteils zuleitet und dass die Steuervorrichtung diesen Wert quantifiziert und in einer Einheit wie 1, 2 usw. über die Bedieneinheit dem Bediener anbietet.

In vorteilhafter Ausgestaltung ist es vorgesehen, dass der Dentalofen eine Anzeigevorrichtung aufweist, über welche die Größe und/oder das Gewicht des Dentalrestaurationsteils in Einheiten darstellbar ist.

In vorteilhafter Ausgestaltung ist es vorgesehen, dass die Bedieneinheit ein Bedienfeld aufweist, das die Einstellung eines Pressprogramms oder eines Brennprogramms in Abhängigkeit von der erfassten Größe oder des erfassten Gewichts des Dentalrestaurationsteils in Einheiten ermöglicht.

In vorteilhafter Ausgestaltung ist es vorgesehen, dass die Bedieneinheit die Steuerung über Sprachsteuerung und/oder Gestensteuerung und/oder über eine Fernbedienung ermöglicht.

In vorteilhafter Ausgestaltung ist es vorgesehen, dass eine Erfassungsvorrichtung die Anzahl, und/oder die Größe des oder der zu brennenden oder zu pressenden Dentalrestaurationsteile erfasst und einen IR-Sensor oder eine Kamera aufweist.

In vorteilhafter Ausgestaltung ist es vorgesehen, dass die Erfassungsvorrichtung das Ausgangssignal des IR-Sensors der Kamera der Steuervorrichtung zuleitet und dass die Steuervorrichtung eine Bilderkennungsvorrichtung aufweist, die einzelne Bereiche des erfassten Bildes erkennt und den Dentalrestaurationsteilen zuordnet.

In vorteilhafter Ausgestaltung ist es vorgesehen, dass die Steuervorrichtung über das Bild der von dem IR-Sensor oder der Kamera erfassten Dentalrestaurationsteile deren Anzahl und/oder Größe bestimmt, basierend auf einem vorgegebenen Abstand zwischen IR-Sensor oder Kamera und den Dentalrestaurationsteilen, und die Anzahl und/oder die Größe basierend auf dem Ergebnis der Erkennung des Bildes der Dentalrestaurationsteile ausgibt.

In vorteilhafter Ausgestaltung ist es vorgesehen, dass die Kamera als Wärmebildkamera ausgebildet ist und bei der Bilderkennung des von der Erfassungsvorrichtung erfassten Bildes der Dentalrestaurationsteile der Umriss der heißen Bereiche, die den heißen Dentalrestaurationsteilen entsprechen, von der kalten Umgebung unterschieden wird und basierend hierauf die Anzahl und/oder die Größe der Dentalrestaurationsteile festgelegt wird.

In vorteilhafter Ausgestaltung ist es vorgesehen, dass die Erfassungsvorrichtung einen numerischen Wert hinsichtlich der Größe und/oder des Gewichts des Dentalrestaurationsteils der Steuervorrichtung zuleitet und für die Quantifizierung die Steuervorrichtung einen Vergleich mit vorgegebenen Wertebereichen vornimmt, nach der Art einer Rundung, und das gerundete Ergebnis der Anzeigevorrichtung zur Darstellung in Einheiten zuleitet.

In vorteilhafter Ausgestaltung ist es vorgesehen, dass eine Erfassungsvorrichtung des Dentalofens beim Beginn des Presszyklus oder des Brennzyklus des Dentalofens aktiv geschaltet ist und bei Annäherung und/oder Einbringung und/oder Aufbringung des Dentalrestaurationsteils an oder in den Dentalofen die Anzahl, die Größe und/oder das Gewicht des Dentalrestaurationsteils automatisch erfasst.

In vorteilhafter Ausgestaltung ist es vorgesehen, dass das Dentalrestaurationsteil in dem Dentalofen für die Aufnahme auf einem Brenngutträger bestimmt ist und eine Erfassungsvorrichtung des Dentalofens den Brenngutträger hinsichtlich seines Gewichts, seiner Größe, also Höhe und/oder Durchmesser und seiner Dichte, also der Masse, erfasst und die Steuervorrichtung die Parameter des Brenngutträgers in die Quantifizierung einbringt.

In vorteilhafter Ausgestaltung ist es vorgesehen, dass ein Brennhilfsmittel des Dentalofens wie ein Brenngutträger eine Kodierung aufweist, über welche eine Erfassungsvorrichtung des Dentalofens diesen erkennt und eine automatische Anpassung des Brennprogramms oder des Pressprogramms vornimmt.

In vorteilhafter Ausgestaltung ist es vorgesehen, dass die Steuervorrichtung bei Erkennen eines Brenngutträgers oder sonstigen Brennhilfsmittels über die Erfassungsvorrichtung einen Korrekturfaktor für die Ansteuerung des Brennprogramms oder Pressprogramms vornimmt und dem Bediener, insbesondere auf einer Anzeigevorrichtung, die Korrektur als Korrekturfaktor oder als Korrekturwert dem Bediener für die möglich Anwahl anbietet.

Weitere Vorteile, Einzelheiten und Merkmale ergeben sich aus der nachstehenden Beschreibung eines Ausführungsbeispiels anhang der Zeichnung.

Die einzige Figur der Zeichnung zeigt:

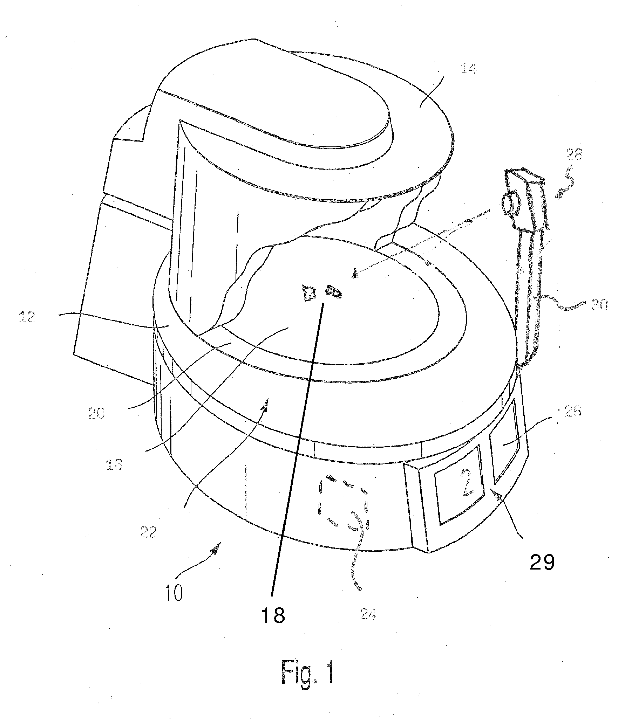

- Fig. 1: einen schematisch dargestellten Brennofen mit einer Anzeigevorrichtung in einer Ausführungsform der Erfindung.

Der in Fig. 1 dargestellte Dentalofen 10 weist einen Ofenunterteil 12 und ein Ofenoberteil 14 auf, das in an sich bekannter Weise nach der Art einer Brennhaube schwenk- und/oder hubbeweglich an dem Ofenunterteil gelagert ist. Hierzu ist in an sich bekannter Weise im rückwärtigen Bereich des Dentalofens 10 ein nicht weiter dargestelltes Gelenk vorgesehen.

Die Brennhaube ist im Grunde hohlzylindrisch ausgebildet, wobei in an sich bekannter Weise an der Zylinderwandung die Ofenheizung vorgesehen ist. Der so gebildete Brennraum ist daher ebenfalls zylindrisch. Er wird unten von einem Ofenboden 16 begrenzt, der für die Aufnahme von Dentalrestaurationsteilen 18 bestimmt ist. Hierbei sind in dem dargestellten Ausführungsbeispiel zwei Kronen als Dentalrestaurationsteile nebeneinander auf dem Ofenboden 16 platziert.

Der Ofenoberteil liegt ringförmig auf dem Ofenunterteil 12 auf. Er ist über eine Dichtung 20 gegenüber diesem abgedichtet, so dass sich der Brennraum unter Unterdruck setzen lässt.

Der Ofenboden 16 ist von einer Ablagefläche 22 umgeben, die es ermöglicht, bereits gebrannte Dentalrestaurationsteile dort für die Abkühlung zu platzieren, oder die nächsten zu brennenden Dentalrestaurationsteile für den Brand dort zur Vorbereitung auf diesen abzulegen.

Erfindungsgemäß ist der Dentalofen mit einer nicht weiter dargestellten Steuervorrichtung 24 ausgerüstet, die die Steuerung des Brennzyklus je nach eingestellten Brennprogramm erlaubt. Ferner ist eine Bedieneinheit 26 an der Ofenvorderseite angebracht, die im dargestellten Ausführungsbeispiel einen berührungsempfindlichen Bildschirm umfasst.

Die Bedieneinheit umfasst auch eine Anzeigevorrichtung, wobei in dem dargestellten Ausführungsbeispiel eine zusätzliche und separate Anzeigevorrichtung 29 realisiert ist, die aber selbstverständlich auch in die Bedieneinheit 26 integriert sein kann.

Wie aus Fig. 1 ersichtlich ist, ist der Brennraum wesentlich größer als die dargestellten Dentalrestaurationsteile 18, in der Praxis mindestens doppelt so groß wie diese.

Erfindungsgemäß ist ferner eine Erfassungsvorrichtung 28 vorgesehen, die in dem dargestellten Ausführungsbeispiel als Wärmebildkamera ausgebildet ist. Die Erfassungsvorrichtung ist über ein Fenster oder gegebenenfalls eine Durchtrittsausnehmung mit ihrer Achse auf die Dentalrestaurationsteile 18 gerichtet. Hierzu ist sie über eine Lagervorrichtung 30 ofenfest gelagert, im dargestellten Ausführungsbeispiel an dem Ofenunterteil 12.

Im Falle eines mit Unterdruck betriebenen Brennofens ist die Brennhaube mit einem druckdichten Fenster ausgestattet, durch das hindurch die Erfassungsvorrichtung 28 die Dentalrestaurationsteile erfasst.

Erfindungsgemäß ist es günstig, wenn die Erfassungsvorrichtung 28 deutlich oberhalb des Ofenbodens 16 angebracht ist und zu dem Ofenboden hin geneigt ist, und zwar zur Mitte des Ofenbodens hin.

Auch wenn dies in Fig. 1 nicht dargestellt ist, können dort Brenngutträger oder sonstige Aufnahmevorrichtungen, oder auch eine zentrale Vertiefung in dem Ofenboden realisiert sein, die dem Benutzer deutlich macht, dass er dort die Dentalrestaurtionsteile einzubringen hat.

Durch die Schwenkstellung der Erfassungsvorrichtung 28 erfasst diese auch aus Sicht der Erfassungsvorrichtung hintereinander liegende Dentalrestaurationsteile, was nicht der Fall wäre, wenn sie auf der Ebene des Ofenbodens 16 angebracht wäre.

In modifizierter Ausgestaltung ist in der Brennhaube kein Fenster oder Durchtrittsausnehmung vorgesehen, und die Erfassungsvorrichtung 28 ist aktiv, während die Brennhaube mit dem Ofenoberteil 14 noch nicht geschlossen ist. In diesem Fall hat sie freie Sicht auf die Dentalrestaurationsteile.

Die Erfassungsvorrichtung 28 kann in dem dargestellten Ausführungsbeispiel als Infrarotsensor, als Wärmebildkamera oder als optische Kamera ausgebildet sein. In jedem Fall erfasst sie die zweidimensionale Größe und im Grunde auch die Form der eingebrachten Dentalrestaurationsteile.

In modifizierter Ausgestaltung ist die Lagervorrichtung 30 an dem Ofenunterteil 12 um eine vertikale Achse, bevorzugt die Ofenachse, schwenkbar, beispielsweise um 90 Grad. Bei dieser Ausgestaltung lässt sich auch dreidimensional die Größe und Form und Anzahl der eingebrachten Dentalrestaurationsteile erfassen.

In diesem Falle wird das Ausgangssignal der Erfassungsvorrichtung 28 der Steuervorrichtung 24 zugeleitet, die dieses Ausgangssignal auswertet, beispielsweise gegebenenfalls über eine Erkennungssoftware.

Das Ergebnis der Erfassung wird auf der Anzeigevorrichtung 29 numerisch dargestellt, im vorliegenden Fall in Form einer 2, nachdem zwei Dentalrestaurationsteile als Kronen erfasst worden sind.

Wenn eine 6-gliedrige Brücke anstelle der beiden hier dargestellten Dentalrestaurationsteile an dieser Stelle vorliegen würde, würde die Steuervorrichtung 24 das diesbezügliche Signal auch auswerten.

Das erfasste Bild entspräche zwar lediglich vom Umriss her einem einzigen Dentalrestaurationsteil. Es wäre jedoch wesentlich größer und im Grunde etwas sichelförmig gebogen.

Über eine Schwellwerterkennung würde die Steuervorrichtung 24 in diesem Falle feststellen, dass das erkannte Dentalrestaurationsteil von der Größe her kleiner als eine 7-gliedrige und größer als eine 5-gliedrige Brücke wäre. Es würde daher anstelle der Zahl 2 die Zahl 6 auf der Anzeigevorrichtung 29 dargestellt.

Eine derartige numerische Wiedergabe ist für den Bediener des Ofens ausgesprochen leicht verständlich, wobei es sich versteht, dass als feste Beschriftung unterhalb oder neben der dargestellten "2" auch das Wort "Einheit (en)" auf der Anzeigevorrichtung 29 angezeigt werden kann.

Basierend auf dem insofern vorliegenden Erfassungsergebnis hinsichtlich der Dentalrestaurationsteile schlägt der Dentalofen 10 über seine Steuervorrichtung 24 damit dem Bediener ein auf die insofern normiert Größe des Dentalrestaurationsteils eingestelltes Brennprogramm vor. In dem dargestellten Ausführungsbeispiel kann der Bediener über die Bedieneinheit 26 dieses noch ändern oder feinjustieren.

Während eine Fehlbedienung durch einen unerfahrenen Zahntechniker durch die numerische Vorgabe praktisch ausgeschlossen ist, kann der erfahrene Zahntechniker hier noch eine weitere Nachjustierung vornehmen und beispielsweise die Schließzeit oder den Verlauf der Brennkurve einstellen.

Erfindungsgemäß ist es jedenfalls vorgesehen, dass in der Steuervorrichtung 24 Grundkurven für einen Brennzyklus hinterlegt sind, die sowohl hinsichtlich der Schließzeit als auch hinsichtlich des Temperaturverlaufs festgelegt sind, aber gegebenenfalls über die Bedieneinheit 26 noch geändert werden können.

Es versteht sich auch, dass in an sich bekannter Weise über ein Thermoelement oder einen Infrarotsensor die Temperatur in dem Brennraum des Dentalofens 10 erfassbar und als Regelparameter für den erwünschten Temperaturverlauf eingesetzt werden kann.

In modifizierter Ausgestaltung des erfindungsgemäßen Dentalofens wird die Einheiteingabe der Dentalrestaurationsteile in anderer Weise als über arabische Zahlen dargestellt, beispielsweise über beliebige Anzeigesymbole wie Blöcke oder Kreise, die die Einheiten je symbolisieren.

In weiterer vorteilhafter Ausgestaltung ist auf der Anzeigevorrichtung 28 ein Signalfeld vorgesehen, das in einfacher Weise nicht nur das Ende des Brennzyklus symbolisiert, sondern auch beispielsweise durch Farbwechsel die Temperatur in Stufen. Hier bieten sich besonders die Farben blau und rot mit wenigen Zwischenabstufungen an, um die von dem Thermoelement des Dentalofens gemessene der Temperatur normiert darzustellen.

Auch kann die Anzeigevorrichtung 28 ein die Bedienung vereinfachendes Stopp-Feed umfassen, das auch den unerfahrenen Bediener darauf hinweist, dass er nicht das Dentalrestaurationsteil unmittelbar nach Öffnen des Ofenoberteils 14 entnehmen darf, sondern erst wenn die Abkühlung zum Abschluss des Brennzyklus ausreichend fortgeschritten ist.

## Patentansprüche

1. Dentalofen für das Brennen oder Pressen eines Dentalrestaurationsteils, das in dem Ofen aufnehmbar und auf einer Unterlage abstellbar ist, wobei der Dentalofen einen Brennraum aufweist, dessen Durchmesser größer als das größte zu brennende Dentalrestaurationsteil ist, und wobei eine Steuervorrichtung und eine Bedieneinheit an dem oder für den Dentalofen (10) vorgesehen sind, **dadurch gekennzeichnet, dass** die Größe und/oder das Gewicht und/oder die Anzahl des bzw. der zu brennenden oder zu pressenden Dentalrestaurationsteile (18) erfasst ist bzw. sind, wobei die erfassten Werte in Einheiten von Dentalrestaurationsteilen umgerechnet und über die Bedieneinheit (26) einstellbar sind.

2. Dentalofen nach Anspruch 1, **dadurch gekennzeichnet, dass** die erfassten Werte in Einheiten quantifizierbar und/oder normierbar sind.

3. Dentalofen nach Anspruch 1 oder 2, **dadurch gekennzeichnet, dass** die Größe des und/ oder die Anzahl der und/oder das Gewicht des Dentalrestaurationsteils (18) über eine Erfassungsvorrichtung (28), die an die Steuervorrichtung (24) angeschlossen ist, erfasst ist bzw. sind.

4. Dentalofen nach einem der vorhergehenden Ansprüche, **dadurch gekennzeichnet, dass** die Erfassungsvorrichtung (28) der Steuervorrichtung (24) einen Wert der erfassten Größe des und/ oder die Anzahl der und/oder des Gewichts des Dentalrestaurationsteils (18) zuleitet und dass die Steuervorrichtung (24) diesen Wert quantifiziert und in einer Einheit wie 1, 2 usw. über die Bedieneinheit (26) dem Bediener anbietet.

5. Dentalofen nach einem der vorhergehenden Ansprüche, **dadurch gekennzeichnet, dass** der Dentalofen (10) eine Anzeigevorrichtung (29) aufweist, über welche die Größe und/oder das Gewicht des Dentalrestaurationsteils (18) in Einheiten darstellbar ist.

6. Dentalofen nach Anspruch 5, **dadurch gekennzeichnet, dass** die Bedieneinheit (26) ein Bedienfeld aufweist, das die Einstellung eines Pressprogramms oder eines Brennprogramms in Abhängigkeit von der erfassten Größe oder des erfassten Gewichts des Dentalrestaurationsteils (18) in Einheiten ermöglicht.

7. Dentalofen nach einem der vorhergehenden Ansprüche, **dadurch gekennzeichnet, dass** die Bedieneinheit (26) die Steuerung über Sprachsteuerung und/oder Gestensteuerung und/oder über eine Fernbedienung ermöglicht.

8. Dentalofen nach einem der vorhergehenden Ansprüche, **dadurch gekennzeichnet, dass** eine Erfassungsvorrichtung die Anzahl, und/oder die Größe des oder der zu brennenden oder zu pressenden Dentalrestaurationsteile (18) erfasst und einen IR-Sensor oder eine Kamera aufweist.

9. Dentalofen nach Anspruch 8, **dadurch gekennzeichnet, dass** die Erfassungsvorrichtung das Ausgangssignal des IR-Sensors oder der Kamera der Steuervorrichtung (24) zuleitet und dass die Steuervorrichtung (24) eine Bilderkennungsvorrichtung aufweist, die einzelne Bereiche des erfassten Bildes erkennt und den Dentalrestaurationsteilen (18) zuordnet.

10. Dentalofen nach einem der Ansprüche 8 oder 9, **dadurch gekennzeichnet, dass** die Steuervorrichtung (24) über das Bild der von dem IR-Sensor oder der Kamera erfassten Dentalrestaurationsteile (18) deren Anzahl und/oder Größe bestimmt, basierend auf einem vorgegebenen Abstand zwischen IR-Sensor oder Kamera und den Dentalrestaurationsteilen (18), und die Anzahl und/oder die Größe basierend auf dem Ergebnis der Erkennung des Bildes der Dentalrestaurationsteile (18) ausgibt.

11. Dentalofen nach einem der Ansprüche 8 bis 10, **dadurch gekennzeichnet, dass** die Kamera als Wärmebildkamera ausgebildet ist und bei der Bilderkennung des von der Erfassungsvorrichtung erfassten Bildes der Dentalrestaurationsteile (18) der Umriss der heißen Bereiche, die den heißen Dentalrestaurationsteilen (18) entsprechen, von der kalten Umgebung unterschieden wird und basierend hierauf die Anzahl und/oder die Größe der Dentalrestaurationsteile (18) festgelegt wird.

12. Dentalofen nach einem der vorhergehenden Ansprüche, **dadurch gekennzeichnet, dass** die Erfassungsvorrichtung einen numerischen Wert hinsichtlich der Größe und/oder des Gewichts des Dentalrestaurationsteils (18) der Steuervorrichtung (24) zuleitet und für die Quantifizierung die Steuervorrichtung (24) einen Vergleich mit vorgegebenen Wertebereichen vornimmt, nach der Art einer Rundung, und das gerundete Ergebnis der Anzeigevorrichtung (29) zur Darstellung in Einheiten zuleitet.

13. Dentalofen nach einem der vorhergehenden Ansprüche, **dadurch gekennzeichnet, dass** eine Erfassungsvorrichtung (28) des Dentalofens (10) beim Beginn des Presszyklus oder des Brennzyklus des Dentalofens (10) aktiv geschaltet ist und bei Annäherung und/oder Einbringung und/oder Aufbringung des Dentalrestaurationsteils (18) an oder in den Dentalofen (10) die Anzahl, die Größe und/oder das Gewicht des Dentalrestaurationsteils (18) automatisch erfasst.

14. Dentalofen nach einem der vorhergehenden Ansprüche, **dadurch gekennzeichnet, dass** das Dentalrestaurationsteil (18) in dem Dentalofen (10) für die Aufnahme auf einem Brenngutträger bestimmt ist und eine Erfassungsvorrichtung des Dentalofens (10) den Brenngutträger hinsichtlich seines Gewichts, seiner Größe, also Höhe und/oder Durchmesser und seiner Dichte, also der Masse, erfasst und die Steuervorrichtung (24) die Parameter des Brenngutträgers in die Quantifizierung einbringt.

15. Dentalofen nach einem der vorhergehenden Ansprüche, **dadurch gekennzeichnet, dass** ein Brennhilfsmittel des Dentalofens (10) wie ein Brenngutträger eine Kodierung aufweist, über welche eine Erfassungsvorrichtung des Dentalofens (10) diesen erkennt und eine automatische Anpassung des Brennprogramms oder des Pressprogramms vornimmt.

16. Dentalofen nach einem der vorhergehenden Ansprüche, **dadurch gekennzeichnet, dass** die Steuervorrichtung (24) bei Erkennen eines Brenngutträgers oder sonstigen Brennhilfsmittels über die Erfassungsvorrichtung (28) einen Korrekturfaktor für die Ansteuerung des Brennprogramms oder Pressprogramms vornimmt und dem Bediener, insbesondere auf einer Anzeigevorrichtung (29), die Korrektur als Korrekturfaktor oder als Korrekturwert dem Bediener für die mögliche Anwahl anbietet.

## Claims

1. A dental furnace for firing or pressing a dental restoration part which is receivable in the furnace and is depositable on a base, the dental furnace having a firing chamber the diameter of which is larger than the largest dental restoration part to be fired, and wherein a control device and an operating unit are provided on or for the dental furnace (10), **characterized in that** the size and/or the weight and/or the number of the said or each of the dental restoration part(s) (18) to be fired or to be pressed is/are detected, respectively, the detected values being converted into units of dental restoration parts and being adjustable via the operating unit (26).

2. The dental furnace according to claim 1, **characterized in that** the detected values can be quantified and/or standardized in units.

3. The dental furnace according to claims 1 or 2, **characterized in that** the size and/or the number and/or the weight of the dental restoration part (18) is/are detected via a detection device (28) connected to the control device (24), respectively.

4. The dental furnace according to one of the preceding claims, **characterized in that** the detection device (28) feeds a value of the detected size of and/or the number of and/or the weight of the dental restoration part (18) into the control device (24) and **in that** the control device (24) quantifies this value and offering it to the operator in a unit such as 1, 2 etc. via the control unit (26).

5. The dental furnace according to one of the preceding claims, **characterized in that** the dental furnace (10) comprises a display device (29) which is used for the size and/or the weight of the dental restoration part (18) to be representable in units.

6. The dental furnace according to claim 5, **characterized in that** the control unit (26) comprises a control panel which allows the setting of a press program or a firing program in units depending on the detected size or the detected weight of the dental restoration part (18).

7. The dental furnace according to one of the preceding claims, **characterized in that** the operating unit (26) enables control via voice control and/or gesture control and/or via remote control.

8. The dental furnace according to one of the preceding claims, **characterized in that** a detection device detects the number and/or the size of the dental restoration part or parts (18) to be fired or pressed and comprises an IR sensor or a camera.

9. The dental furnace according to claim 8, **characterized in that** the detection device feeds the output signal of the IR sensor or camera into the control device (24) and **in that** the control device (24) comprises an image recognition device which recognizes individual areas of the detected image and assigning them to the dental restoration parts (18).

10. The dental furnace according to one of the claims 8 or 9, **characterized in that** the control device (24) uses the image of the dental restoration parts (18) captured by the IR sensor or the camera to determine the number and/or size thereof, based on a predetermined distance between the IR sensor or the camera and the dental restoration parts (18), and outputs the number and/or the size based on the image recognition result of the dental restoration parts (18).

11. The dental furnace according to one of claims 8 to 10, **characterized in that** the camera is designed as a thermal imaging camera and, during image recognition of the image of the dental restoration parts (18) captured by the detection device, the outline of the hot areas corresponding to the hot dental restoration parts (18) is distinguished from the cold environment and the number and/or size of the dental restoration parts (18) is determined based thereon.

12. The dental furnace according to one of the preceding claims, **characterized in that** the detection device feeds a numerical value regarding size and/or weight of the dental restoration part (18) into the control device (24), and, for quantification the control device (24), performs a comparison using predetermined ranges of values, in a rounding manner, feeding the rounded result into the display device (29) for unit representation.

13. The dental furnace according to one of the preceding claims, **characterized in that** a detection device (28) of the dental furnace (10) is actively switched at the start of the press cycle or the firing cycle of the dental furnace (10) and automatically detects the number, the size and/or the weight of the dental restoration part (18) when the dental restoration part (18) approaches and/or is inserted and/or applied to or in the dental furnace (10).

14. The dental furnace according to one of the preceding claims, **characterized in that** the dental restoration part (18) in the dental furnace (10) is intended to be placed on a firing tray, and a detection device of the dental furnace (10) detects the firing tray with respect to its weight, its size, i.e. height and/or diameter, and its density, i.e. mass, and the control device (24) introduces the parameters of the firing tray into the quantification.

15. The dental furnace according to one of the preceding claims, **characterized in that** a firing aid of the dental furnace (10), such as a firing tray, comprises a coding by means of which coding a detection device of the dental furnace (10) recognizes the firing tray, automatically adapting the firing program or the press program.

16. The dental furnace according to one of the preceding claims, **characterized in that** the control device (24), when recognizing a firing tray or another firing aid, uses the detection device (28) to provide a correction factor for the control of the firing program or press program, and offering to the operator, in particular on a display device (29), the correction as a correction factor or as a correction value to the operator for possible selection.

## Revendications

1. Four dentaire pour la cuisson ou le pressage d'une pièce de restauration dentaire qui peut être reçue dans le four et placée sur un support, où le four dentaire présente une chambre de cuisson dont le diamètre est plus grand que la plus grande pièce de restauration dentaire à cuire, et un dispositif de commande et une unité d'opération sont prévus sur le four dentaire (10) ou pour le four dentaire (10), **caractérisé en ce que** la taille et/ou le poids et/ou le nombre de la (des) pièce(s) de restauration dentaire (18) à cuire ou à presser est/sont détectée(s), où les valeurs détectées sont converties en unités de pièces de restauration dentaire et sont réglables par l'unité d'opération (26).

2. Four dentaire selon la revendication 1, **caractérisé en ce que** les valeurs détectées peuvent être quantifiées et/ou normalisées en unités.

3. Four dentaire selon la revendication 1 ou 2, **caractérisé en ce que** la taille et/ou le nombre et/ou le poids des pièces de restauration dentaire (18) est/sont détectés par un dispositif de détection (28) qui est relié à l'appareil de commande (24).

4. Four dentaire selon l'une des revendications précédentes, **caractérisé en ce que** le dispositif de détection (28) fournit au dispositif de commande (24) une valeur correspondant à la taille et/ou au nombre et/ou au poids de la pièce de restauration dentaire (18) détectée et que le dispositif de commande (24) quantifie cette valeur et la propose à l'opérateur comme une unité telle que 1, 2 etc. à travers l'unité d'opération (26).

5. Four dentaire selon l'une des revendications précédentes, **caractérisé en ce que** le four dentaire (10) comporte un dispositif d'affichage (29) au moyen duquel la taille et/ou le poids de la pièce de restauration dentaire (18) peuvent être affichés en unités.

6. Four dentaire selon la revendication 5, **caractérisé en ce que** l'unité d'opération (26) présente un panneau de commande qui permet de régler un programme de pressage ou un programme de cuisson en fonction de la taille détectée ou du poids détecté en unités de la pièce de restauration dentaire (18).

7. Four dentaire selon l'une des revendications précédentes, **caractérisé en ce que** l'unité d'opération (26) permet une commande vocale et/ou une commande gestuelle et/ou une commande par télécommande.

8. Four dentaire selon l'une des revendications précédentes, **caractérisé en ce qu'**un dispositif de détection détecte le nombre et/ou la taille de la pièce ou des pièces de restauration dentaire (18) à cuire ou à presser et comprend un capteur IR ou une caméra.

9. Four dentaire selon la revendication 8, **caractérisé en ce que** le dispositif de détection envoie le signal de sortie du capteur IR ou de la caméra au dispositif de commande (24) et **en ce que** le dispositif de commande (24) comprend un dispositif de reconnaissance d'image qui reconnaît des zones individuelles de l'image détectée et les associe aux pièces de restauration dentaire (18).

10. Four dentaire selon l'une des revendications 8 ou 9, **caractérisé en ce que** le dispositif de commande (24) détermine le nombre et/ou la taille des pièces de restauration dentaire (18) par le biais de l'image détectée par le capteur IR ou la caméra, sur la base d'une distance prédéterminée entre le capteur IR ou la caméra et les pièces de restauration dentaire (18), et émet le nombre et/ou la taille sur la base du résultat de la reconnaissance de l'image des pièces de restauration dentaire (18).

11. Four dentaire selon l'une des revendications 8 à 10, **caractérisé en ce que** la caméra est conçue comme une caméra thermique et, lors de la reconnaissance de l'image des pièces de restauration dentaire (18) saisie par le dispositif de détection, le contour des zones chaudes correspondant aux pièces de restauration dentaire chaudes (18) est distingué de l'environnement froid et le nombre et/ou la taille des pièces de restauration dentaire (18) est déterminé sur cette base.

12. Four dentaire selon l'une des revendications précédentes, **caractérisé en ce que** le dispositif de détection transmet une valeur numérique concernant la taille et/ou le poids de la pièce de restauration dentaire (18) au dispositif de commande (24) et pour la quantification le dispositif de commande (24) effectue une comparaison avec des plages de valeurs prédéterminées, à la manière d'un arrondi, et transmet le résultat arrondi au dispositif d'affichage (29) pour la présentation en unités.

13. Four dentaire selon l'une des revendications précédentes, **caractérisé en ce qu'**un dispositif de détection (28) du four dentaire (10) est activé au début du cycle de pressage ou du cycle de cuisson du four dentaire (10) et détecte automatiquement le nombre, la taille et/ou le poids de la pièce de restauration dentaire (18) lorsque la pièce de restauration dentaire (18) s'approche et/ou est insérée et/ou appliquée sur ou dans le four dentaire (10).

14. Four dentaire selon l'une des revendications précédentes, **caractérisé en ce que** la pièce de restauration dentaire (18) dans le four dentaire (10) est destinée à être reçue sur un plateau de cuisson et un dispositif de détection du four dentaire (10) détecte le plateau de cuisson en ce qui concerne son poids, sa taille, c'est-à-dire sa hauteur et/ou son diamètre, et sa densité, c'est-à-dire sa masse, et le dispositif de commande (24) introduit les paramètres du plateau de cuisson dans la quantification.

15. Four dentaire selon l'une des revendications précédentes, **caractérisé en ce qu'**un accessoire de cuisson du four dentaire (10), comme un plateau de cuisson, présente un codage au moyen duquel un dispositif de détection du four dentaire (10) le reconnaît et adapte automatiquement le programme de cuisson ou le programme de pressage.

16. Four dentaire selon l'une des revendications précédentes, **caractérisé en ce que** le dispositif de commande (24), lors de la reconnaissance d'un plateau de cuisson ou d'un autre auxiliaire de cuisson, effectue un facteur de correction pour la commande du programme de cuisson ou du programme de pressée par l'intermédiaire du dispositif de détection (28) et propose à l'opérateur, en particulier sur un dispositif d'affichage (29), la correction comme facteur de correction ou comme valeur de correction pour une sélection éventuelle.
